# EUROPEAN PATENT SPECIFICATION

(11) **EP 3 584 857 B1**
(45) Date of publication and mention of the grant of the patent: **01.12.2021**
(21) Application number: 18874956.8
(22) Date of filing: 22.10.2018
(51) Int. Cl.: H01M 50/531, H01M 4/04, B26F 1/12, H01M 4/139, H01M 10/052, B05C 5/02, H01M 10/04

(54) **METHOD FOR MANUFACTURING ELECTRODE FOR RECHARGEABLE BATTERY**
VERFAHREN ZUR HERSTELLUNG EINER ELEKTRODE FÜR EINE WIEDERAUFLADBARE BATTERIE
PROCÉDÉ DE FABRICATION D'ÉLECTRODE POUR BATTERIE RECHARGEABLE

(30) Priority: 31.10.2017 KR 20170144121
(43) Date of publication of application: 25.12.2019
(73) Proprietor: LG Chem, Ltd., Seoul 07336 (KR)
(72) Inventor: SON, Jin Young, Daejeon 34122 (KR); SHIN, Moo Yong, Daejeon 34122 (KR); CHOY, Sang Hoon, Daejeon 34122 (KR); YANG, Jung Min, Daejeon 34122 (KR); LEE, Taek Soo, Daejeon 34122 (KR); LEE, Do Hyun, Daejeon 34122 (KR); JUN, Chan Soo, Daejeon 34122 (KR); KIM, Cheol Woo, Daejeon 34122 (KR)
(74) Representative: Plasseraud IP
(86) International application number: PCT/KR2018/012498
(87) International publication number: WO 2019/088534

(56) References cited:
- EP-A1- 2 799 154
- JP-A- 2010 212 266
- KR-A- 20130 098 758
- KR-A- 20160 004 386
- KR-A- 20170 062 877
- KR-A- 20170 062 877
- KR-A- 20170 105 752
- US-A1- 2017 110 713

## Description

### [Technical Field]

### CROSS-REFERENCE TO RELATED APPLICATION

This application claims priority to and the benefit of Korean Patent Application No. 10-2017-0144121 filed in the Korean Intellectual Property Office on October 31, 2017.

The present invention relates to a method for manufacturing a rechargeable battery electrode.

### [Background Art]

Recently, as technology development and demand for mobile devices has grown, demands for a rechargeable battery as an energy source that can be charged/discharged have been rapidly increased, and such a rechargeable battery essentially includes an electrode assembly, which is an electricity generation element.

The electrode assembly is formed by assembling a positive electrode, a separation membrane, and a negative electrode in a predetermined shape, wherein the positive electrode and the negative electrode are plate-shaped electrodes, of which a positive electrode slurry and a negative electrode slurry, each including an active material, are coated on current collectors, each formed of an electrically conductive metal foil, and then dried.

A process for manufacturing the plate-shaped electrode may include a process for manufacturing an electrode mixture that contains an electrode active material, a process for manufacturing an electrode sheet by coating the electrode mixture on a metal foil, a process for forming an electrode tab on an electrode, a process for rolling electrodes, and a process for manufacturing unit electrodes by notching the electrodes into a desired shape and size.

US patent application US 2017/110713 discloses a method of manufacturing an electrical storage device that includes an electrode provided with a cutout part in which a terminal unit including no active material layer in order to achieve downsizing of an instrument on which the electrical storage device is mounted.

Korean patent application KR 2017 0062877 relates to a battery cell having an electrode assembly composed of electrode parts of different shapes and sizes that can be mounted to the shape and space of various devices.

European patent application EP 2 799 154 discloses a slot-die coating method comprising controlling an intermittent transfer of the coating fluid from a slot-die coating head onto the substrate surface to provide coated areas on the substrate surface separated by uncoated areas.

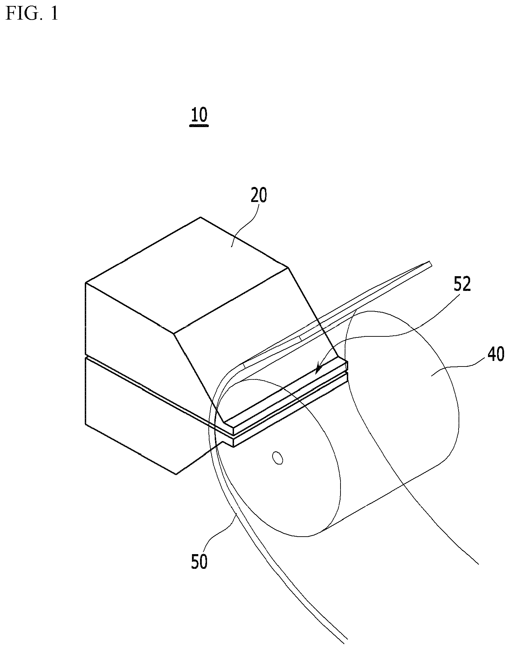

The process for manufacturing the electrode sheet is illustrated in FIG. 1.

Referring to FIG. 1, in the electrode sheet manufacturing process 10, a metal sheet 50 that moves by a re-winder 40 is set to contact a slot die coater 20 that discharges an electrode slurry, and then the electrode slurry is coated on the metal sheet 50 while forming a line 52. Such an electrode line 52 may be singular, or maybe two or more formed by repeating several coating processes.

The metal sheet 50 in which the electrode lines 52 are formed is notched into a desired shape and size such that a single unit electrode can be manufactured.

Meanwhile, the rechargeable batteries may be manufactured in an atypical geometric design, which is different from a known rectangular or cylindrical structure, so that they may be applied to products that are diversified and may be applicable to various devices having curved line or curved surfaces.

As an example of the atypical design, recently, an irregular-shaped battery having a polygonal structure in which some portions are missed in a long direction has been attracting attention so as to be applicable to a slim or curved type of device, or a variety of device designs, and an electrode is also manufactured with the irregular-shaped structure for realization of the same.

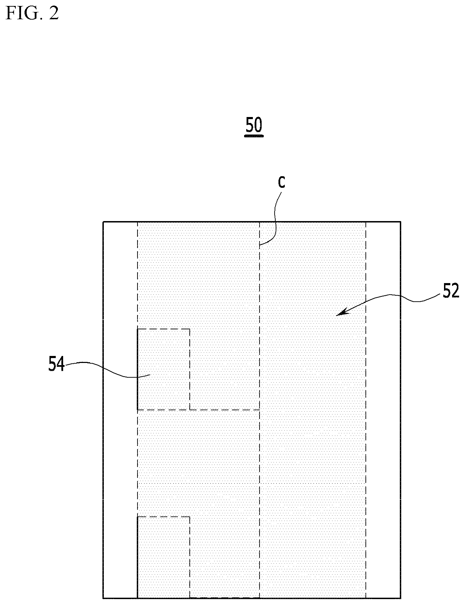

However, when the metal sheet shown in FIG. 2, is notched with a polygonal structure that corresponds to a cut line C as an example of such an irregular-shape, part (54) of the electrode line 52 not included in the irregular shape is abandoned, and thus expensive raw materials such as an electrode active material, a binder, and a solvent of the electrode slurry, which are the main components of the electrode line 52, are wasted.

This is a cause of an increase in the manufacturing cost of the irregular-shaped electrode and the rechargeable battery including the same. Therefore, there is a need for a technique for solving the increase of the manufacturing cost.

### [DISCLOSURE]

### [Technical Problem]

An object of the present invention is to solve the problem of the related art as described above and a technical problem required from the past.

Specifically, an object of the present invention is designed to provide a method for manufacturing an electrode for a rechargeable battery, the method including coating an electrode line for minimizing an amount of electrode slurry that is unnecessary wasted while manufacturing the electrode for the rechargeable battery with a desired irregular shape, and notching the electrode line into an irregular shape.

### [Technical Solution]

A method for manufacturing a rechargeable battery for achieving such an object includes:
with reference to a virtual center axis that divides a metal sheet into left and right, setting a first coating line that is parallel with the center axis at a location deflected to one side, and a second coating line that is parallel with the center axis at a location deflected to the other side so as to correspond to the first coating line with reference to the virtual center axis; and
coating an electrode slurry on the metal sheet while alternately moving a slot die to the first coating line and the second coating line.

Thus, according to the method of the present invention, the slot die that is alternately disposed in the first coating line and the second coating line may coat an electrode line in a zigzag shape, and thus the electrode line includes an irregular shape including an uncoated region, thereby saving an amount of electrode slurry that would be coated on the uncoated region.

The first coating line is set at a location that is separated from one end portion in a width direction of the metal sheet with a length that is more than 10 % to less than 50 %, particularly, a length that is more than 10 % to less than 30 %, and more particularly, a length that is more than 10 % to less than 20 %, with respect to the width of the metal sheet, and
the second coating line is set at a location that is separated from the other end portion in the width direction of the metal sheet with a length that is more than 10 % to less than 50 %, particularly, a length that is more than 10 % to less than 30 %, and more particularly, a length that is more than 10 % to less than 20 %, with respect to the width of the metal sheet.

In such a structure, a margin portion is formed between the first coating line and an end of the metal sheet, and the margin portion is processed into a predetermined shape, thereby forming an electrode tab.

Similarly, a margin portion is formed between the second coating line and an end of the metal sheet, and the margin portion is processed into a predetermined shape, thereby forming an electrode tab.

The coating of the electrode slurry on the metal sheet includes:
producing a first state in which one end of the slot die is located in the first coating line and the electrode slurry is coated along the first coating line; and
producing a second state in which the other end of the slot die is located in the second coating line and the electrode slurry is coated along the second coating line, and
in the first state and the second state, a side end of the slot die that is not located in any of the first coating line and the second coating line is located in third coating lines that are parallel with the first coating line and the second coating line, and are respectively set at opposite ends of the metal sheet.

In addition, in the method for manufacturing the electrode for the rechargeable battery, the slot die is set to alternate between the first state and the second state,
a first electrode line is formed between the first coating line and the second coating line in both of the first state and the second state,
a second electrode line is formed between the second coating line and the third coating line that is adjacent to the second coating line in the first state, and
a third electrode line is formed between the first coating line and the third coating line that is adjacent to the first coating line in the second state.

In this case, a first uncoated portion, which is an uncoated region having the first coating line as a boundary, is set in the third electrode line in the first state, and
a second uncoated portion, which is an uncoated region having the second coating line as a boundary, is set in the second electrode line in the second state.

Depending on cases, after forming electrode lines, the method may further include rolling and drying the first electrode line, the second electrode line, and the third electrode line.

The method for manufacturing the electrode for the rechargeable battery according to the present invention includes forming an irregular-shaped electrode by notching the metal sheet with:
a first shape that includes at least a part of the third electrode line, excluding the first uncoated portion, and at least a part of the first electrode line; and
a second shape that includes at least a part of the second electrode line, excluding the second uncoated portion, and at least a part of the first electrode line, and
notching with respect to the first shape and notching with respect to the second shape are respectively carried out with reference to a virtual line that equally divides the first electrode line between boundaries of the first electrode line.

That is, since the method for manufacturing the electrode for the rechargeable battery includes notching while excluding an uncoated region where the electrode slurry does not exist, and thus the amount of electrode slurry wasted during the notching can be minimized, and waste of expensive organic/inorganic material such as an electrode active material, a binder, a solvent, and a conductive material, which form the electrode slurry, can be prevented.

Each of the first shape and the second shape may include:
a first electrode portion derived from the first electrode line; and
a second electrode portion derived from the second electrode line or the third electrode line, and extended from the first electrode portion and having a size that is smaller than the first electrode portion such that at least one step difference is formed on a plane, and
the metal sheet may be notched into the first shape and the second shape with different electrodes that form the first shape and the second shape.

That is, the first electrode portion having a relatively large size and the second electrode portion having a relatively small size form a step difference such that an electrode having an irregular shape can be manufactured.

The step difference may include a step difference corner that is formed in a portion where an exterior side of the first electrode portion and an exterior side of the second electrode portion cross each other at an angle of more than 30 degrees and less than 180 degrees, and
in the step difference corner, the metal sheet may be additionally notched such that a part of each of the first electrode portion and the second electrode portion are inwardly recessed such that an exterior circumference recess portion may be formed.

One or more step differences may be included depending on setting of a notching range, and accordingly, an irregular-shape electrode having various polygonal structures may be manufactured.

Specifically, two or fewer step difference corners may be included, and more specifically, only one step difference corner may be included.

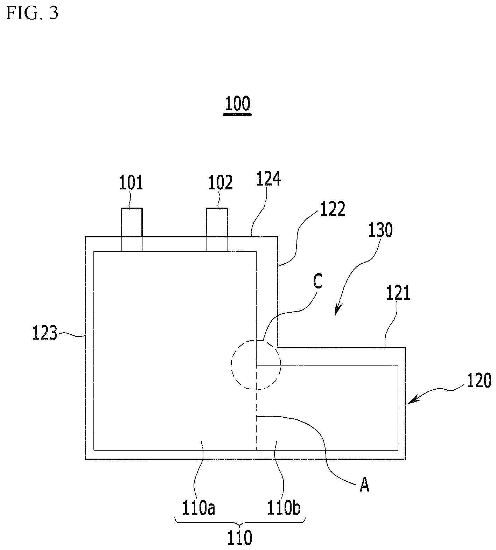

Meanwhile, in FIG. 3, a schematic view of a battery cell that includes an irregular-shaped electrode according to a prior art is illustrated.

Referring to FIG. 3, a battery cell 100 is formed with a structure in which exterior sides 121, 122, 123, and 124 of a cell case 120 are thermally bonded while an electrode assembly 110 is installed in the cell case 120, together with an electrolyte solution.

Specifically, the electrode assembly 110 is divided into two electrode portions 110a and 110b, each having a different planar shape and size with respect to the ground, with reference to a boundary A, and accordingly, a step difference 130 formed due to the size difference between the electrode portions 110a and 110b is formed in the electrode assembly 110. In addition, the cell case 120 is formed with a shape that corresponds to the electrode assembly 110, and the exterior sides 121, 122, 123, and 124 are sealed along end portions of the electrode assembly 110 such that the battery cell 100 is formed with an irregular-shaped structure including the step difference 130 corresponding to the shape of the electrode assembly 110 rather than being formed with a conventional rectangular shape.

However, in the structure of the battery cell 100 shown in FIG. 3, since different exterior sides 121 and 122 of the cell case 120 also cross each other so as to correspond to the shape of exterior circumferential corners C, which are portions where exterior sides of the electrode portions 110a and 110b intersect each other, a relatively wide sealing area is formed at the portion where the exterior sides 121 and 122 intersect each other.

In addition, since the portion where the exterior sides 121 and 122 share the sealing portion while intersecting each other has relatively lower sealing force compared to other portions, a relatively wider thermally bonded sealing area than that of the other exterior sides 123 and 124 is required at the exterior sides 121 and 122 of the cell case 120, which are adjacent to the exterior corner C.

Accordingly, the structure of the battery cell 100 is disadvantageous in that space utilization of the device is decreased by as much as the sealing area that is unnecessarily occupied by the exterior sides 121 and 122 in the exterior corner C.

In addition, excluding the exterior side 124 where electrode leads 101 and 102 are formed, each of the exterior sides 121, 122, and 123 that are sealed by thermal bonding in the cell case 120 needs to be bent to a side direction of the electrode assembly 110 so as to prevent moisture permeation therethrough and reduce the area of the battery cell, but in the structure shown in FIG. 3, the exterior sides 121 and 122 of the cell case 120, which are adjacent to the exterior corner C, are connected with each other corresponding to the exterior corner C, and thus the exterior sides 121 and 122 cannot be easily bent to the side surface of the electrode assembly 110.

When a portion where the exterior sides 121 and 122 are connected is cut for bending, a sealing area of the cell case 120 between the exterior corner C and a cut portion is not secured, thereby causing the sealing state to not be secured.

Accordingly, in the present invention, an irregular-shaped electrode for a rechargeable battery, in which an exterior circumference recess portion is formed at a portion where a first electrode portion and a second electrode portion cross each other, is manufactured, and in a battery cell including such an irregular-shaped electrode, a cell case is additionally sealed by thermal bonding at the exterior circumference recess portion, thereby improving sealing reliability.

The external circumference recess portion may have a rounded structure including curved lines, a complex structure in which curved lines and straight lines are connected, or a polygonal structure in which a plurality of straight lines are connected, in a plan view.

The method for manufacturing the irregular-shaped electrode may further include notching to form an electrode tab that externally protrudes from at least one of the first electrode portion and the second electrode portion.

In method for manufacturing the irregular-shaped electrode, notching may be additionally carried to chamfer the corners of at least one of the first electrode portion and the second electrode portion.

The irregular-shape electrode defined by the present invention may be a positive electrode or a negative electrode.

The positive electrode is manufactured by, for example, coating a mixture of a positive electrode active material, a conductive material, and a binder on a positive electrode current collector and/or an extension current collecting part, and drying it, and if required, further adding a filler to the mixture.

The positive electrode current collector and/or the extension current collecting part are/is generally manufactured to have a thickness of 3 to 500 µm. The positive electrode current collector and the extension current collecting part are not particularly limited as long as they do not cause a chemical change in the battery and have high conductivity, and for example, stainless steel, aluminum, nickel, titanium, fired carbon, or aluminum or stainless steel of which the surface is treated with carbon, nickel, titanium, silver, and the like, may be used. The positive electrode current collector and the extension current collecting part may increase adhesion of the positive electrode active material by forming fine protrusions and depressions on the surfaces thereof, and may be formed in various forms such as a film, a sheet, foil, a net, a porous body, a foam, a non-woven fabric body, and the like.

The positive electrode active material may include layered compounds or compounds substituted with one or more transition metals such as lithium cobalt oxide (LiCoO₂) and lithium nickel oxide (LiNiO₂); lithium manganese oxides such as those with the chemical formula Li₁+xMn₂-xO₄ (wherein x is 0 - 0.33), LiMnO₃, LiMn₂O₃, LiMnO₂, and the like; lithium copper oxide (Li₂CuO₂); vanadium oxides such as LiV₃O₈, LiFe₃O₄, V₂O₅, and Cu₂V₂O₇; Ni-site type lithium nickel oxides represented by the chemical formula LiNi1-xMxO₂ (wherein M = Co, Mn, Al, Cu, Fe, Mg, B, or Ga, and x = 0.01 - 0.3); lithium manganese composite oxides represented by the chemical formula LiMn₂-xMxO₂ (wherein M = Co, Ni, Fe, Cr, Zn, or Ta, and x = 0.01 - 0.1) or Li₂Mn₃MO₈ (wherein M = Fe, Co, Ni, Cu, or Zn); LiMn₂O₄ in which Li is partially substituted with an alkaline-earth metal ion in the chemical formula; a disulfide compound; Fe₂(MoO₄)₃; and the like, but are not limited thereto.

The conductive material is usually added at 1 to 30 wt%, based on the total weight of the mixture including the positive electrode active material. This conductive material is not particularly limited as long as it does not cause a chemical change in the battery and has conductivity, and for example, graphite such as natural graphite or artificial graphite; carbon black, acetylene black, ketjen black, channel black, furnace black, lamp black, and summer black; a conductive fiber such as carbon fiber or metal fiber; a metal powder such as fluorocarbon, aluminum, and nickel powder; conductive whiskers such as zinc oxide and potassium titanate; conductive metal oxides such as titanium oxide; conductive materials such as polyphenylene derivatives; and the like may be used.

The binder is a component assisting in binding the active material to the conductive material and the like, and binding to the current collector, and is generally added at 1 to 30 wt%, based on the total weight of the mixture including the positive electrode active material. As an example of this binder, polyvinylidene fluoride, polyvinyl alcohol, carboxymethyl cellulose (CMC), starch, hydroxypropyl cellulose, regenerated cellulose, polyvinylpyrrolidone, tetrafluoroethylene, polyethylene, polypropylene, an ethylene-propylene-diene terpolymer (EPDM), sulfonated EPDM, styrene butylene rubber, fluorine rubber, various copolymers, and the like may be listed.

The filler is a component suppressing expansion of the positive electrode, and is optionally used. It is not particularly limited as long as it does not cause a chemical change in the battery and is a fibrous material, and for example, olefin-based polymers such as polyethylene and polypropylene, and fibrous materials such as glass fiber and carbon fiber, may be used.

The negative electrode is manufactured by coating a negative electrode active material on the negative electrode current collector and/or the extension current collecting part, and drying it, and if necessary, the components as described above may be optionally further included.

The negative electrode current collector and/or the extension current collecting part are/is generally manufactured to have a thickness of 3 to 500 µm. The positive electrode current collector and an extended current collector part are not particularly limited as long as they do not cause a chemical change in the battery and have high conductivity, and for example, stainless steel, aluminum, nickel, titanium, sintered carbon, or aluminum or stainless steel which are surface-treated with carbon, nickel, titanium, silver, or the like, and the like, may be used. The positive electrode current collector and the extended current collector part may have fine protrusions and depressions formed on the surface to increase adherence of the positive electrode active material, and may be formed into various forms such as a film, a sheet, foil, a net, a porous body, a foam, and a non-woven fabric body.

As the negative electrode active material, for example, carbons such as hard carbon and graphite-based carbon; metal composite oxides such as LixFe₂O₃ (0≤x≤1), LixWO₂ (0≤x≤1), SnxMe1-xMe'yOz (Me: Mn, Fe, Pb or Ge; Me': Al, B, P, Si, an element of Group 1, 2, or 3 of the periodic table, or a halogen; 0<x≤1; 1≤y≤3; 1≤z≤8); a lithium metal; a lithium alloy; a silicon-based alloy; a tin-based alloy; metal oxides such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, and Bi₂O₅; conductive polymers such as polyacetylene; Li-Co-Ni-based materials; and the like may be used.

### [Description of the Drawings]

FIG. 1 is a schematic view of an electrode manufacturing method according to a conventional method.
FIG. 2 is a plan schematic view of an electrode sheet coated with an electrode slurry according to a prior art.
FIG. 3 is a schematic view of an irregular-shaped battery cell according to a prior art.
FIG. 4 is a flowchart of a manufacturing method according to one exemplary embodiment of the present invention.
FIG. 5 and FIG. 6 are schematic views of a process for coating an electrode slurry on a metal sheet according to the exemplary embodiment of the present invention.
FIG. 7 is a schematic view of a process for notching the metal sheet coated with the electrode slurry into an irregular shape according to the exemplary embodiment of the present invention.
FIG. 8 is a schematic plan view of an irregular-shaped electrode for a rechargeable battery according to the exemplary embodiment of the present invention.

### [Mode for Invention]

Hereinafter, the exemplary embodiments of the present invention will be described in detail, referring to the accompanying drawings. However, in the description of the present disclosure, descriptions for already known functions or components will be omitted for clarifying the present disclosure.

In order to clearly describe the present disclosure, parts which are not related to the description are omitted, and the same reference numerals refer to the same or like components, throughout the specification. In addition, since the size and the thickness of each component shown in the drawing are arbitrarily represented for convenience of the description, the present disclosure is not limited to the illustration.

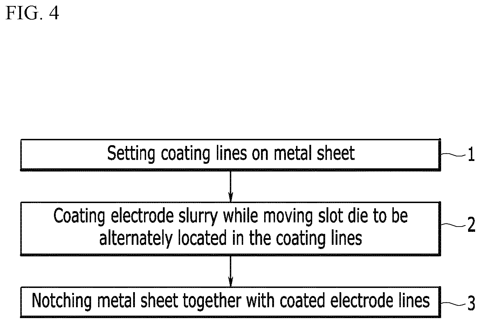

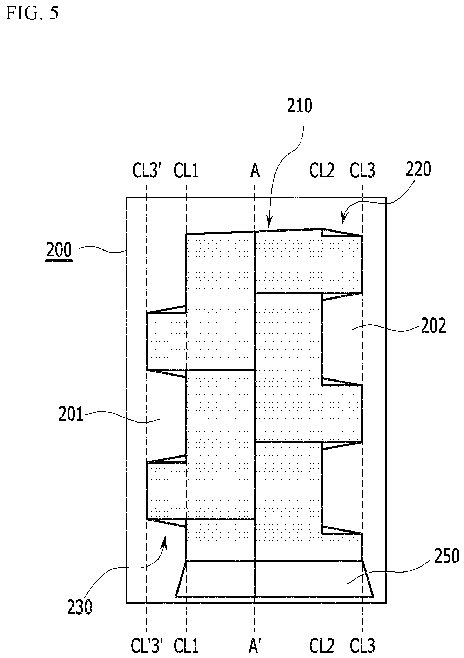

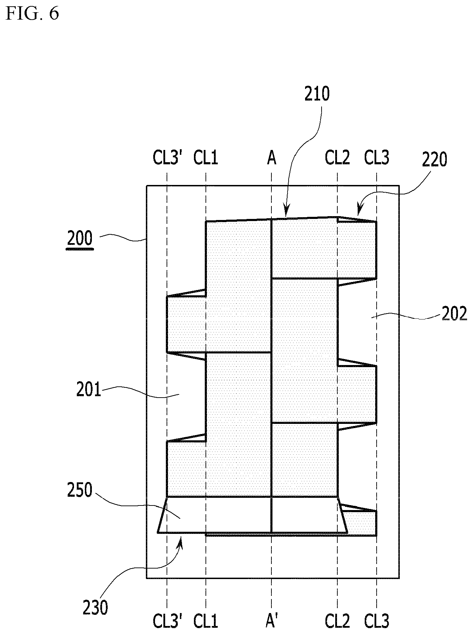

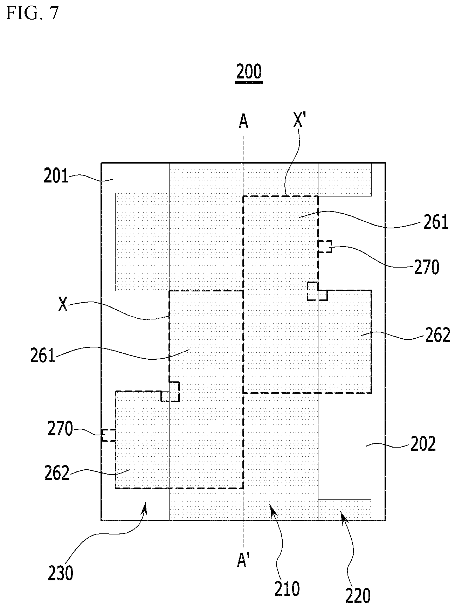

FIG. 4 is a flowchart of a method for manufacturing an electrode for a rechargeable battery according to an exemplary embodiment of the present invention, FIG. 5 and FIG. 6 are schematic views of a process for coating an electrode slurry on a metal sheet, and FIG. 7 is a schematic view of a process for notching the metal sheet.

Referring to the drawings, a manufacturing method according to the present invention includes a process 1 for setting coating lines on a metal sheet, a process 2 for coating an electrode slurry while moving a slot die to be alternately located on predetermined coating lines, and a process 3 for notching the metal sheet together with the electrode lines into a predetermined shape.

First, in the process 1, with reference to a virtual center axis A-A' that divides a metal sheet 200 to the left and right, a first coating line CL1 that is parallel with the central axis is set at a location deflected to one side.

In addition, with reference to the virtual center axis A-A', a second coating line CL2 that is parallel with the center axis A-A at a location that is deflected to the other side is set corresponding to the first coating line CL1.

Next, the process 2 is carried out. In the process 2, the electrode slurry is coated on the metal sheet 200 while moving a slot die 250 in which the electrode slurry is loaded to be alternately located at the first coating line CL1 and the second coating line CL2.

The process 2 is a step that includes producing a first state of FIG. 5 and a second state of FIG. 6, and during which the first state and the second state are alternately produced.

Here, as shown in FIG. 5, the first state implies a state in which one side of the slot die 250 is located in the first coating line CL1, and the electrode slurry is coated along the first coating line CL1.

The second state implies a state in which the other end of the slot die 250 is located in the second coating line CL2, and the electrode slurry is coated along the second coating line CL2.

A side end of the slot die 250, which is not located in either of the first coating line CL1 or the second coating line CL2 in the first state and the second state is located between third coating lines CL3 and CL3' that are parallel with the first coating line CL1 and the second coating line CL2.

That is, the third coating lines CL3 add CL3' are coating lines that are additionally set at opposite ends of the metal sheet 200. Depending on cases, the third coating lines CL3 and CL3' may be set while simply moving the slot die 250 in the process 1.

However, the slot die 250 discharges the electrode slurry between the first coating line CL1 and the second coating line CL2 in any state, and accordingly, a first electrode line 210 is formed between the first coating line CL1 and the second coating line CL2 in the first state and the second state.

In the first state, one end of the slot die 250 is deflected over the second coating line CL2 such that a second electrode line 220 is formed between the second coating line CL2 and the third coating line CL3 that is adjacent to the second coating line CL2. Simultaneously, a first uncoated portion 201, which is an coated region while having the first coating line CL1 as a boundary may be set in a third electrode line 230, which will be described later.

On the contrary, when the other end of the slot die 250 is deflected over the first coating line CL1, the third electrode line 230 is formed between the first coating line CL1 and the third coating line CL3' that is adjacent to the first coating line CL1. Simultaneously, a second uncoated portion 202, which is an uncoated region while having the second coating line CL2 as a boundary, is set in a second electrode line 220, which will be described later.

After such a coating process, rolling and drying the first electrode line 210, the second electrode line 220, and the third electrode line 230 may be carried out.

Next, the process 3 is carried out. In the process 3, the metal sheet 200 is notched with a first shape X that includes at least part of the third electrode line 230, excluding the first uncoated portion 201 and a part of the first electrode line 210, and a second shape X' that includes at least a part of the second electrode line 220, excluding the second uncoated portion 202 and a part of the first electrode line 210, which does not overlap the first shape X such that an irregular-shaped electrode can be formed.

In this case, the first shape X and the second shape X1 arerespectively notched with reference to the virtual line A-A' that equally divides the first electrode line 210 between the boundaries of the first electrode line 210.

In FIG. 7, when the notching is carried out, one stepped corner is included, but one or more stepped corners may be included depending on a range of the notching, and accordingly, an irregular-shaped electrode having various polygonal structures may be manufactured.

In addition, in the process 3, notching for forming an electrode tab 270 that protrudes to the outside from a second electrode portion 262 may be additionally carried out. However, depending on a desired shaped of the irregular-shaped electrode, notching that forms an electrode tab 270 that protrudes to the outside from a first electrode portion 261 may be carried out.

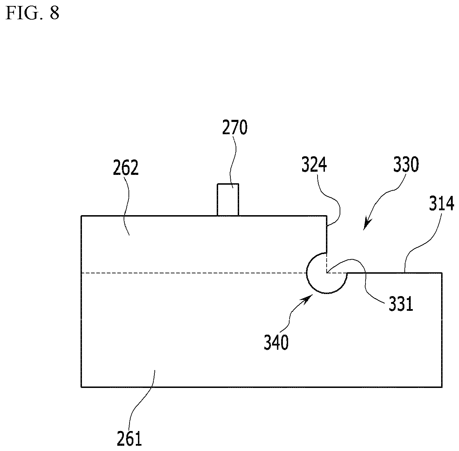

FIG. 8 is a schematic view of an irregular-shaped electrode according to an exemplary embodiment of the present invention, and an irregular-shaped electrode notched in the process 3 will be described in detail with reference to FIG. 8, together with FIG. 7.

Referring to the drawings, the first shape X and the second shape X' respectively have an irregular-shaped polygonal structure on a plane, each including one step difference corner.

Specifically, the first shape X and the second shape X' may respectively include a first electrode portion 261 derived from the first electrode line 210, and a second electrode portion 262 derived from the second electrode line 220 and the third electrode line 230 and extended from the first electrode portion 261 while having a size that is smaller than the first electrode portion 261 such that at least one step difference (refer to 330 of FIG. 8) is formed on a plane.

Here, the step difference 330 includes a step difference corner 331 that is formed at a portion where an exterior side 314 of the first electrode portion 261 and an exterior side 324 of the second electrode portion 262 intersect each other at about 90 degrees, and in the notching of the process 3, notching may be additionally carried out to form an exterior circumference recess portion 340 having a shape formed by inwardly recessing a part of the first electrode portion 261 and a part of the second electrode portion 262.

The present invention is as set out in the claims.

### [Industrial applicability]

As described above, according to the method for manufacturing an electrode for a rechargeable battery according to the exemplary embodiments of the present invention, a slot die that is alternately disposed in the first coating line and the second coating line may coat an electrode line in a zigzag shape, and thus the electrode line includes an irregular shape including an uncoated region, thereby saving an amount of electrode slurry that would be coated on the uncoated region.

In addition, since notching is carried out excluding the uncoated region where the electrode slurry is not coated, the amount of slurry wasted during the notching can be minimized, thereby preventing waste of expensive organic/inorganic materials such as an electrode active material, a binder, a solvent, and a conductive material.

## Claims

1. A method for manufacturing an electrode for a rechargeable battery, comprising:
with reference to a virtual center axis (A-A') that divides a metal sheet (200) left and right, setting a first coating line (CL1) that is parallel with the center axis at a location deflected to one side, and a second coating line (CL2) that is parallel with the center axis at a location deflected to the other side so as to correspond to the first coating line (CL1) with reference to the virtual center axis (A-A); and
coating an electrode slurry on the metal sheet (200) while alternately moving a slot die (250) to the first coating line (CL1) and the second coating line (CL2),
wherein the coating of the electrode slurry on the metal sheet (200) comprises:
producing a first state in which one end of the slot die (250) is located in the first coating line (CL1) and the electrode slurry is coated along the first coating line (CL1); and
producing a second state in which the other end of the slot die (250) is located in the second coating line (CL2) and the electrode slurry is coated along the second coating line (CL2), and
in the first state and the second state, a side end of the slot die (250) that is not located in either of the first coating line (CL1) and the second coating line (CL2) is located in third coating lines (CL3, CL3') that are parallel with the first coating line (CL1) and the second coating line (CL2), and are respectively set at opposite ends of the metal sheet (200),
wherein the slot die (250) is set to alternate between the first state and the second state,
a first electrode line (210) is formed between the first coating line (CL1) and the second coating line (CL2) in both of the first state and the second state,
a second electrode line (220) is formed between the second coating line (CL2) and the third coating line (CL3) that is adjacent to the second coating line (CL2) in the first state, and
a third electrode line (230) is formed between the first coating line (CL1) and the third coating line (CL3') that is adjacent to the first coating line (CL1) in the second state,
wherein a first uncoated portion (201), which is an uncoated region having the first coating line (CL1) as a boundary is set in the third electrode line (230) in the first state, and a second uncoated portion (202), which is an uncoated region having the second coating line (CL2) as a boundary is set in the second electrode line (220) in the second state,
the method further comprising forming an irregular-shaped electrode by notching the metal sheet (200) with:
a first shape (X) that includes at least a part of the third electrode line (230), excluding the first uncoated portion (201), and at least a part of the first electrode line (210); and
a second shape (X') that includes at least a part of the second electrode line (220), excluding the second uncoated portion (202), and at least a part of the first electrode line (210),
wherein notching with respect to the first shape (X) and notching with respect to the second shape (X') are respectively carried out with reference to a virtual line (A-A') that equally divides the first electrode line (210) between boundaries of the first electrode line (210),
wherein the first coating line (CL1) is set at a location that is separated from one end portion in a width direction of the metal sheet (200) with a length that is more than 10 % to less than 50 % with respect to the width of the metal sheet (200), and
the second coating line (CL2) is set at a location that is separated from the other end portion in the width direction of the metal sheet (200) with a length that is more than 10 % to less than 50 % with respect to the width of the metal sheet (200).

2. The method for manufacturing the electrode for the rechargeable battery of claim 1, wherein each of the first shape (X) and the second shape (X') comprises:
a first electrode portion (261) derived from the first electrode line (210); and
a second electrode portion (262) derived from the second electrode line (220) or the third electrode line (230), and extended from the first electrode portion (261) and having a size that is smaller than the first electrode portion (261) such that at least one step difference (330) is formed on a plane, and
the metal sheet (200) is notched into the first shape (X) and the second shape (X') with different electrodes that form the first shape (X) and the second shape (X').

3. The method for manufacturing the electrode for the rechargeable battery of claim3, wherein the step difference (330) comprises a step difference corner (331) that is formed in a portion where an exterior side (314) of the first electrode portion (261) and an exterior side (324) of the second electrode portion (262) cross each other at an angle of more than 30 degrees and less than 180 degrees, and
in the step difference corner (331), the metal sheet (200) is additionally notched such that a part of each of the first electrode portion (261) and the second electrode portion (262) are inwardly recessed such that an exterior circumference recess portion (340) is formed.

4. The method for manufacturing the electrode for the rechargeable battery of claim 3, wherein the exterior circumference recess portion (340) comprises, on a plane:
a rounded structure including a curved line;
a complex structure in which a curved line and a straight line are connected; or
a polygonal structure in which a plurality of straight lines are connected.

5. The method for manufacturing the electrode for the rechargeable battery of claim 3, wherein the step difference (330) comprises one or more of the step difference corners (331).

6. The method for manufacturing the electrode for the rechargeable battery of claim 5, wherein the step difference (330) comprises only one step difference corner (331).

7. The method for manufacturing the electrode for the rechargeable battery of claim2, wherein notching is additionally carried out to form an electrode tab (270) that externally protrudes from at least one of the first electrode portion (261) and the second electrode portion (262).

8. The method for manufacturing the electrode for the rechargeable battery of claim2, wherein notching is additionally carried to chamfer the corners of at least one of the first electrode portion (261) and the second electrode portion (262).

9. The method for manufacturing the electrode for the rechargeable battery of claim1, further comprising rolling and drying the first electrode line (210), the second electrode line (220), and the third electrode line (230).

## Patentansprüche

1. Verfahren zum Herstellen einer Elektrode für eine wiederaufladbare Batterie, umfassend:
mit Bezug auf eine virtuelle Mittelachse (A-A'), die ein Metallblech (200) nach links und rechts teilt, Setzen einer zur Mittelachse parallelen ersten Beschichtungslinie (CL1) an einer nach einer Seite abgelenkten Stelle und einer zur Mittelachse parallelen zweiten Beschichtungslinie (CL2) an einer nach der anderen Seite abgelenkten Stelle, um der ersten Beschichtungslinie (CL1) in Bezug auf die virtuelle Mittelachse (A-A') zu entsprechen; und
Beschichten einer Elektrodenaufschlämmung auf das Metallblech (200), während abwechselnd eine Schlitzdüse (250) zu der ersten Beschichtungslinie (CL1) und der zweiten Beschichtungslinie (CL2) bewegt wird,
wobei die Beschichtung der Elektrodenaufschlämmung auf das Metallblech (200) umfasst:
Herstellen eines ersten Zustands, in dem sich ein Ende der Schlitzdüse (250) in der ersten Beschichtungslinie (CL1) befindet und die Elektrodenaufschlämmung entlang der ersten Beschichtungslinie (CL1) beschichtet wird; und
Herstellen eines zweiten Zustands, in dem sich das andere Ende der Schlitzdüse (250) in der zweiten Beschichtungslinie (CL2) befindet und die Elektrodenaufschlämmung entlang der zweiten Beschichtungslinie (CL2) beschichtet wird, und
wobei sich im ersten Zustand und im zweiten Zustand ein Seitenende der Schlitzdüse (250), das sich weder in der ersten Beschichtungslinie (CL1) noch in der zweiten Beschichtungslinie (CL2) befindet, in dritten Beschichtungslinien (CL3, CL3') befindet, die parallel zu der ersten Beschichtungslinie (CL1) und der zweiten Beschichtungslinie (CL2) sind und jeweils an gegenüberliegenden Enden des Metallblechs (200) angeordnet sind,
wobei die Schlitzdüse (250) so eingestellt ist, dass sie zwischen dem ersten Zustand und dem zweiten Zustand wechselt,
eine erste Elektrodenlinie (210) zwischen der ersten Beschichtungslinie (CL1) und der zweiten Beschichtungslinie (CL2) sowohl dem ersten Zustand als auch dem zweiten Zustand gebildet wird,
eine zweite Elektrodenlinie (220) zwischen der zweiten Beschichtungslinie (CL2) und der dritten Beschichtungslinie (CL3), die in dem ersten Zustand zur zweiten Beschichtungslinie (CL2) benachbart ist, gebildet wird, und
eine dritte Elektrodenlinie (230) zwischen der ersten Beschichtungslinie (CL1) und der dritten Beschichtungslinie (CL3'), die im zweiten Zustand zur ersten Beschichtungslinie (CL1) benachbart ist, gebildet wird,
wobei ein erster unbeschichteter Abschnitt (201), der ein unbeschichteter Bereich mit der ersten Beschichtungslinie (CL1) als Grenze ist, im ersten Zustand in die dritte Elektrodenlinie (230) gesetzt wird und ein zweiter unbeschichteter Abschnitt (202), der ein unbeschichteter Bereich mit der zweiten Beschichtungslinie (CL2) als Grenze ist, im zweiten Zustand in die zweite Elektrodenlinie (220) gesetzt wird,
wobei das Verfahren ferner Bilden einer unregelmäßig geformten Elektrode umfasst durch Einkerben des Metallblechs (200) mit:
einer ersten Form (X), die mindestens einen Teil der dritten Elektrodenlinie (230), ausschließlich des ersten unbeschichteten Abschnitts (201), und mindestens einen Teil der ersten Elektrodenlinie (210) umfasst; und
einer zweiten Form (X'), die mindestens einen Teil der zweiten Elektrodenlinie (220), ausschließlich des zweiten unbeschichteten Abschnitts (202), und mindestens einen Teil der ersten Elektrodenlinie (210) umfasst,
wobei das Einkerben in Bezug auf die erste Form (X) und das Einkerben in Bezug auf die zweite Form (X') jeweils in Bezug auf eine virtuelle Linie (A-A') durchgeführt werden, die die erste Elektrodenlinie (210) gleichmäßig zwischen Grenzen der ersten Elektrodenlinie (210) teilt,
wobei die erste Beschichtungslinie (CL1) an einer Stelle gesetzt wird, die von einem Endabschnitt in einer Breitenrichtung des Metallblechs (200) mit einer Länge von mehr als 10 % bis weniger als 50 % in Bezug auf die Breite des Metallblechs (200) getrennt ist und
die zweite Beschichtungslinie (CL2) an einer Stelle gesetzt wird, die von dem anderen Endabschnitt in der Breitenrichtung des Metallblechs (200) mit einer Länge von mehr als 10 % bis weniger als 50 % in Bezug auf die Breite des Metallblechs (200) getrennt ist.

2. Verfahren zum Herstellen der Elektrode für die wiederaufladbare Batterie nach Anspruch 1, wobei jede von der ersten Form (X) und der zweiten Form (X') umfasst:
einen ersten Elektrodenabschnitt (261), der von der ersten Elektrodenlinie (210) abgeleitet ist; und
einen zweiten Elektrodenabschnitt (262), der von der zweiten Elektrodenlinie (220) oder der dritten Elektrodenlinie (230) abgeleitet ist und sich von dem ersten Elektrodenabschnitt (261) erstreckt und eine Größe aufweist, die kleiner als der erste Elektrodenabschnitt (261) ist, so dass mindestens ein Stufenunterscheid (330) in einer Ebene gebildet ist, und
das Metallblech (200) in die erste Form (X) und die zweite Form (X') mit unterschiedlichen Elektroden eingekerbt ist, die die erste Form (X) und die zweite Form (X') bilden.

3. Verfahren zum Herstellen der Elektrode für die wiederaufladbare Batterie nach Anspruch 2, wobei der Stufenunterschied (330) eine Stufenunterschiedsecke (331) umfasst, die in einem Abschnitt gebildet ist, in dem sich eine Außenseite (314) des ersten Elektrodenabschnitts (261) und eine Außenseite (324) des zweiten Elektrodenabschnitts (262) einander in einem Winkel von mehr als 30 Grad und weniger als 180 Grad kreuzen, und
in der Stufenunterschiedsecke (331) das Metallblech (200) zusätzlich so eingekerbt ist, dass ein Teil jedes des ersten Elektrodenabschnitts (261) und des zweiten Elektrodenabschnitts (262) nach innen vertieft sind, so dass ein Außenumfangsvertiefungsabschnitt (340) gebildet wird.

4. Verfahren zum Herstellen der Elektrode für die wiederaufladbare Batterie nach Anspruch 3, wobei der Außenumfangsvertiefungsabschnitt (340) in einer Ebene umfasst:
eine abgerundete Struktur mit einer gekrümmten Linie;
eine komplexe Struktur, bei der eine gekrümmte Linie und eine gerade Linie verbunden sind; oder
eine polygonale Struktur, in der eine Mehrzahl gerader Linien verbunden sind.

5. Verfahren zum Herstellen der Elektrode für die wiederaufladbare Batterie nach Anspruch 3, wobei der Stufenunterschied (330) eine oder mehrere der Stufenunterschiedsecken (331) umfasst.

6. Verfahren zum Herstellen der Elektrode für die wiederaufladbare Batterie nach Anspruch 5, wobei der Stufenunterschied (330) nur eine Stufenunterschiedsecke (331) umfasst.

7. Verfahren zum Herstellen der Elektrode für die wiederaufladbare Batterie nach Anspruch 2, wobei das Einkerben zusätzlich durchgeführt wird, um eine Elektrodenlasche (270) zu bilden, die von mindestens einem von dem ersten Elektrodenabschnitt (261) und dem zweiten Elektrodenabschnitt (262) nach außen vorsteht.

8. Verfahren zum Herstellen der Elektrode für die wiederaufladbare Batterie nach Anspruch 2, wobei das Einkerben zusätzlich durchgeführt wird, um die Ecken von mindestens einem von dem ersten Elektrodenabschnitt (261) und dem zweiten Elektrodenabschnitt (262) abzuschrägen.

9. Verfahren zum Herstellen der Elektrode für die wiederaufladbare Batterie nach Anspruch 1, ferner umfassend Walzen und Trocknen der ersten Elektrodenlinie (210), der zweiten Elektrodenlinie (220) und der dritten Elektrodenlinie (230).

## Revendications

1. Procédé de fabrication d'une électrode pour une batterie secondaire, comprenant :
en référence à un axe central virtuel (A-A') qui divise une feuille métallique (200) à gauche et à droite, la définition d'une première ligne de revêtement (CL1) qui est parallèle à l'axe central à un emplacement dévié vers un côté, et d'une deuxième ligne de revêtement (CL2) qui est parallèle à l'axe central à un emplacement dévié vers l'autre côté de façon à correspondre à la première ligne de revêtement (CL1) en référence à l'axe central virtuel (A-A') ; et
le revêtement d'une suspension d'électrode sur la feuille métallique (200) tout en déplaçant alternativement une filière à fente (250) vers la première ligne de revêtement (CL1) et la deuxième ligne de revêtement (CL2),
dans lequel le revêtement de la suspension d'électrode sur la feuille métallique (200) comprend :
la production d'un premier état dans lequel une extrémité de la filière à fente (250) est située dans la première ligne de revêtement (CL1) et la suspension d'électrode est revêtue le long de la première ligne de revêtement (CL1) ; et
la production d'un deuxième état dans lequel l'autre extrémité de la filière à fente (250) est située dans la deuxième ligne de revêtement (CL2) et la suspension d'électrode est revêtue le long de la deuxième ligne de revêtement (CL2), et
dans le premier état et le deuxième état, une extrémité latérale de la filière à fente (250), qui n'est pas située dans l'une ou l'autre parmi la première ligne de revêtement (CL1) et la deuxième ligne de revêtement (CL2), est située dans des troisièmes lignes de revêtement (CL3, CL3') qui sont parallèles à la première ligne de revêtement (CL1) et à la deuxième ligne de revêtement (CL2), et qui sont respectivement définies à des extrémités opposées de la feuille métallique (200),
dans lequel la filière à fente (250) est définie pour alterner entre le premier état et le deuxième état,
une première ligne d'électrode (210) est formée entre la première ligne de revêtement (CL1) et la deuxième ligne de revêtement (CL2) dans chacun du premier état et du deuxième état,
une deuxième ligne d'électrode (220) est formée entre la deuxième ligne de revêtement (CL2) et la troisième ligne de revêtement (CL3) qui est adjacente à la deuxième ligne de revêtement (CL2) dans le premier état, et
une troisième ligne d'électrode (230) est formée entre la première ligne de revêtement (CL1) et la troisième ligne de revêtement (CL3') qui est adjacente à la première ligne de revêtement (CL1) dans le deuxième état,
dans lequel une première portion non revêtue (201), qui est une région non revêtue ayant la première ligne de revêtement (CL1) comme limite, est définie dans la troisième ligne d'électrode (230) dans le premier état, et une deuxième portion non revêtue (202), qui est une région non revêtue ayant la deuxième ligne de revêtement (CL2) comme limite, est définie dans la deuxième ligne d'électrode (220) dans le deuxième état,
le procédé comprenant en outre la formation d'une électrode de forme irrégulière en entaillant la feuille métallique (200) avec :
une première forme (X) qui comporte au moins une partie de la troisième ligne d'électrode (230), à l'exclusion de la première portion non revêtue (201), et au moins une partie de la première ligne d'électrode (210) ; et
une deuxième forme (X') qui comporte au moins une partie de la deuxième ligne d'électrode (220), à l'exclusion de la deuxième portion non revêtue (202), et au moins une partie de la première ligne d'électrode (210),
dans lequel l'entaillage par rapport à la première forme (X) et l'entaillage par rapport à la deuxième forme (X') sont respectivement effectués en référence à une ligne virtuelle (A-A') qui divise également la première ligne d'électrode (210) entre les limites de la première ligne d'électrode (210),
dans lequel la première ligne de revêtement (CL1) est définie à un emplacement qui est séparé d'une portion d'extrémité dans une direction de la largeur de la feuille métallique (200) avec une longueur qui fait de plus de 10 % à moins de 50 % par rapport à la largeur de la feuille métallique (200), et
la deuxième ligne de revêtement (CL2) est définie à un emplacement qui est séparé de l'autre portion d'extrémité dans la direction de la largeur de la feuille métallique (200) avec une longueur qui fait de plus de 10 % à moins de 50 % par rapport à la largeur de la feuille métallique (200).

2. Procédé de fabrication de l'électrode pour la batterie secondaire selon la revendication 1, dans lequel chacune parmi la première forme (X) et la deuxième forme (X') comprend :
une première portion d'électrode (261) dérivée de la première ligne d'électrode (210) ; et
une deuxième portion d'électrode (262) dérivée de la deuxième ligne d'électrode (220) ou de la troisième ligne d'électrode (230), et s'étendant depuis la première portion d'électrode (261) et ayant une taille qui est plus petite que la première portion d'électrode (261), de sorte qu'au moins une différence de niveau (330) soit formée sur un plan, et
la feuille métallique (200) est entaillée dans la première forme (X) et la deuxième forme (X') avec différentes électrodes qui forment la première forme (X) et la deuxième forme (X').

3. Procédé de fabrication de l'électrode pour la batterie secondaire selon la revendication 2, dans lequel la différence de niveau (330) comprend un coin de différence de niveau (331) qui est formé dans une portion où un côté extérieur (314) de la première portion d'électrode (261) et un côté extérieur (324) de la deuxième portion d'électrode (262) se croisent l'un l'autre à un angle de plus de 30 degrés et de moins de 180 degrés, et
dans le coin de différence de niveau (331), la feuille métallique (200) est en outre entaillée de sorte qu'une partie de chacune parmi la première portion d'électrode (261) et la deuxième portion d'électrode (262) soit évidée vers l'intérieur de sorte qu'une portion d'évidement de circonférence extérieure (340) soit formée.

4. Procédé de fabrication de l'électrode pour la batterie secondaire selon la revendication 3, dans lequel la portion d'évidement de circonférence extérieure (340) comprend, sur un plan :
une structure arrondie comportant une ligne courbe ;
une structure complexe dans laquelle une ligne courbe et une ligne droite sont connectées ; ou
une structure polygonale dans laquelle une pluralité de lignes droites sont connectées.

5. Procédé de fabrication de l'électrode pour la batterie secondaire selon la revendication 3, dans lequel la différence de niveau (330) comprend un ou plusieurs des coins de différence de niveau (331).

6. Procédé de fabrication de l'électrode pour la batterie secondaire selon la revendication 5, dans lequel la différence de niveau (330) comprend seulement un coin de différence de niveau (331).

7. Procédé de fabrication de l'électrode pour la batterie secondaire selon la revendication 2, dans lequel l'entaillage est en outre effectué pour former une languette d'électrode (270) qui fait saillie extérieurement depuis au moins une parmi la première portion d'électrode (261) et la deuxième portion d'électrode (262).

8. Procédé de fabrication de l'électrode pour la batterie secondaire selon la revendication 2, dans lequel l'entaillage est en outre effectué pour chanfreiner les coins d'au moins une parmi la première portion d'électrode (261) et la deuxième portion d'électrode (262).

9. Procédé de fabrication de l'électrode pour la batterie secondaire selon la revendication 1, comprenant en outre le laminage et le séchage de la première ligne d'électrode (210), de la deuxième ligne d'électrode (220), et de la troisième ligne d'électrode (230).
